# EUROPÄISCHE PATENTANMELDUNG

(11) **EP 4 056 946 A1**
(43) Veröffentlichungstag der Anmeldung: **14.09.2022**
(21) Anmeldenummer: 22158135.8
(22) Anmeldetag: 23.02.2022
(51) Int. Cl.: G01B 5/06, G02B 27/01

(54) **VERFAHREN UND SYSTEM ZUR TAKTILEN MESSUNG, INSBESONDERE SCHICHTDICKENMESSUNG**

(30) Priorität: 12.03.2021 DE 102021106126
(71) Anmelder: Helmut Fischer GmbH Institut für Elektronik und Messtechnik., 71069 Sindelfingen (DE)
(72) Erfinder: Binder, Bernd, 7111 Waldenbuch (DE)
(74) Vertreter: Patentanwälte Mammel und Maser PartG mbB

(57) **Zusammenfassung**

Die Erfindung betrifft ein Verfahren zur taktilen Messung auf einer Oberfläche (13) eines Messobjekts (11), bei dem zumindest ein Messwert (32) mittels einer taktilen Messsonde (12) erfasst wird, wobei der zumindest eine Messwert (32) durch eine Datenverarbeitungseinrichtung (16) an eine Datenbrille (20) übertragen wird, und der zumindest eine Messwert (32) in der der Datenbrille (20) wiedergegeben wird. Die Erfindung betrifft auch ein System umfassend zumindest eine Messsonde, eine Datenbrille und eine Datenverarbeitungseinrichtung. Das System ist eingerichtet, um das Verfahren zur taktilen Schichtdickenmessung auf einer Oberfläche eines Messobjekts auszuführen. (Hierzu Figur 4)

## Beschreibung

Die Erfindung betrifft ein Verfahren zur taktilen Messung, insbesondere Schichtdickenmessung, und ein System zur Durchführung des Verfahrens.

Oberflächen von Industrieanlagen, Fahrzeugen, Schiffen, Bauwerken und anderen Industriegütern werden heutzutage mit Schutzschichten, beispielsweise einem Lack, behandelt, um Abnutzungen zu verhindern oder zumindest zu verlangsamen. Ein typisches Beispiel stellen Rostschutzanstriche dar. Durch den Einfluss ultravioletter Strahlung und klimatischen Einwirkungen müssen derartige Schutzanstriche regelmäßig erneuert werden. Dabei sollte aber nicht in vorbestimmten Intervallen ein erneuter Anstrich über einen schon bestehenden aufgebracht werden. Eine solche Vorgehensweise hätte vielerlei Nachteile. Dies würde zu einer mit jeder Maßnahme zunehmenden Schichtdicke und damit einer Gewichtserhöhung führen, was aufgrund der statischen Tragfähigkeiten (z.B. bei einer Hängebrücke) problematisch sein kann. Auch wäre eine solche Vorgehensweise kostenintensiv. Zudem können die Abnutzungen bei dem Industriegegenstand lokal unterschiedlich sein. Dies ist beispielsweise bei Schiffsrümpfen unter- und oberhalb der Wasserlinie der Fall oder auch bei freistehenden Industrieanlagen bezüglich der Wetterseite und Seiten anderer Ausrichtung.

Aus diesen Gründen werden typischerweise Schichtdickenmessungen durchgeführt, um den Grad der Abnutzung bzw. die verbliebene Schichtdicke der zuvor aufgebrachten Schicht vor dem Aufbringen eines erneuten Schutzanstrichs zu bestimmen. Bei den Schichtdickenbestimmungen müssen bei den hier in Rede stehenden Anlagen aufgrund deren Größe oder Komplexität eine Vielzahl an Messungen an unterschiedlichen Messpositionen erfolgen. Um belastbare Schlussfolgerungen über die Qualität der noch bestehenden Schutzschicht ziehen zu können, müssen die Messpositionen definiert sein. In anderen Worten muss für die jeweilige Anlage ein Raster aus Messpositionen festgelegt werden, das bei der erneuten Überprüfung abgearbeitet werden kann. Die (Wieder-) Auffindung der jeweiligen Messpositionen stellt dabei regelmäßig ein Problem dar. Abweichungen von den vorgegebenen Messpositionen können zu verfälschten Messungen und damit zu fehlerhaften Schlussfolgerungen führen.

Bei einer Abweichung zwischen Istmessposition und Sollmessposition bei bisherigen Prüfungen ist eine zusätzliche Komplikation darin zu sehen, dass eine aufgrund der Abweichung fehlerhafte Messung üblicherweise erst bei der Auswertung der Messung, und damit nicht mehr während der Durchführung der Messung vor Ort selbst, wahrgenommen wird. Soll diese Messposition erneut überprüft werden, so muss eine zusätzliche Messmaßnahme durchgeführt werden, wie beispielsweise das Stellen eines Gewichtes oder das Anfordern einer Hebebühne oder das Abseilen an Gebäuden oder Gegenständen, was mit einem hohen Arbeitsaufwand verbunden ist.

Aus der EP 2 386 822 A2 ist ein Verfahren und eine Vorrichtung zur Messung der Dicke dünner Schichten auf großflächigen Messoberflächen bekannt, bei dem zumindest eine Messsonde, die zumindest ein Sensorelement und zumindest eine zugeordnete Aufsetzkalotte aufweist, auf der Messoberfläche zur Erfassung eines Messwertes aufgesetzt wird. Die Messsonde wird dann mit einer Vorrichtung über die Messoberfläche geführt, um äquidistante Messpunkte entlang einzelner Zeilen zu erfassen, die anschließend in Form einer Matrix ausgewertet werden. Die Reproduzierbarkeit und Vergleichbarkeit aufeinanderfolgender Messungen hängt hier beispielsweise davon ab, dass die Vorrichtung durch den Nutzer entlang derselben Linien geführt wird.

Der Erfindung liegt die Aufgabe zugrunde, ein Verfahren zur taktilen Messung, insbesondere Schichtdickenmessung und ein System zur Durchführung des Verfahrens bereitzustellen, wodurch eine Vereinfachung in der Durchführung von Messungen und eine verbesserte Vergleichbarkeit von Messungen ermöglicht wird.

Diese Aufgabe wird durch ein Verfahren gemäß den Merkmalen des Anspruchs 1 gelöst.

Durch das erfindungsgemäße Verfahren zur taktilen (kontaktberührenden) Messung auf einer Oberfläche eines Messobjekts, insbesondere Schichtdickenmessung, wird zumindest ein Messwert mittels einer taktilen Messsonde erfasst und durch eine Datenverarbeitungseirichtung an eine Datenbrille übertragen. Zudem wird der zumindest eine Messwert anhand von Bilddarstellungsmitteln in der Datenbrille wiedergegeben. Durch die Bilddarstellung des Messwerts, insbesondere durch eine Anzeige, in der Datenbrille erhält der Nutzer, der die Messung durchführt, eine unmittelbare Rückmeldung über den Messwert. Dabei kann er weiterhin in seiner Prüfroutine fortführen, ohne auf eine Anzeige eines separaten oder zusätzlichen Gerätes zu schauen. Der Nutzer kann somit unmittelbar wahrnehmen, ob beispielsweise die Erfassung eines Messwerts erfolgt ist oder fehlgeschlagen sein sollte, so dass im letzteren Fall die Messung ohne Verzögerung nochmals erfolgt oder nachgeholt werden kann.

Die taktile Messsonde kann zur berührungsbasierten Messung von Schichtdicken, von Korrosionsschutz, zur Material- und Werkstoffprüfung, zur Temperaturprüfung oder zur Oberflächenprüfung der Oberfläche des Messobjekts eingesetzt werden.

Nach einer bevorzugten Ausführungsform des Verfahrens ist vorgesehen, dass eine Bilddarstellung in der Datenbrille zumindest teilweise transparent ("semi-transparent") erfolgt, so dass die Bilddarstellung mit Realinformationen aus der tatsächlichen Umgebung überlagert wird. Erfolgt die Bilddarstellung zumindest teilweise transparent, so kann die Brille eine vermischte Realität ("mixed reality") wiedergeben. Unter einer vermischten Realität ist vorliegend eine Überlagerung einer virtuellen Realität und einer physischen Realität zu verstehen. Der Nutzer kann also sowohl durch die Datenbrille erzeugte Informationen wie auch das real physische Messobjekt gleichzeitig wahrnehmen. Er muss also seinen Blick nicht vom Messobjekt abwenden. Somit wird vermieden, dass die Bilddarstellung den Nutzer ablenkt. Zudem kann der Nutzer selbst noch das Umfeld und die Messposition überprüfen.

Beispielsweise kann die Datenbrille eine Videobrille sein. Die Bilddarstellungsmittel der Datenbrille umfassen dann zumindest visuelle Bilddarstellungsmittel, beispielsweise ein Display oder eine Projektionsvorrichtung wie eine Digitalkamera, um eine Bilddarstellung auf einer Oberfläche wie einem Brillenglas zu ermöglichen. Die Datenbrille kann auch eine Brille sein, die eine virtuelle Realität ("virtual reality") wiedergeben kann. Die Bilddarstellungsmittel der Datenbrille werden bevorzugt so angeordnet, dass die Bilddarstellung im Sichtfeld des Nutzers erfolgt.

Weiter kann die Datenbrille auch eine erweiterte Realität ("augmented reality") wiedergeben, also eine Erweiterung der Realitätswahrnehmung um Informationen weiterer Sinnesorgane, die entsprechend überlagert wiedergegeben werden können.

Gemäß einer bevorzugten Ausführungsform wird der zumindest eine Messwert durch die Datenverarbeitungseinrichtung mit zumindest einer Qualitätsinformation korreliert. Der Messwert mit der jeweiligen korrelierten Qualitätsinformation wird anschließend an die Datenbrille übermittelt und dort wiedergegeben. Unter der Qualitätsinformation ist eine Information zu verstehen, die angibt, ob der erfasste Messwert einem vorgegebenen Wert entspricht oder nicht. So können abweichende Messwerte in effizienter Weise markiert und dem Nutzer zur Verfügung gestellt werden. Beispielsweise kann die Bilddarstellung der zumindest einen Oberflächeninformation des Messobjekts entsprechend modifiziert sein, so dass der Nutzer eine unvorhergesehene Abweichung wahrnimmt und gegebenenfalls eine Kontrollmessung vornehmen kann. Beispielsweise kann der Messwert in einer Farbe, insbesondere grün, ausgegeben werden, um zu signalisieren, dass der Messwert einem Vorgegebenen entspricht. Auch kann der Messwert in einer fetten Schriftart ausgegeben werden, wenn dieser dem Vorgegebenen entspricht und in dünner Schriftart ausgegeben werden, sofern dieser erfasste Messwert außerhalb des vorgegebenen Bereiches liegt.

Bevorzugt ist vorgesehen, dass der zumindest eine Messwert durch die Datenverarbeitungseinrichtung mit zumindest einem oberen und/oder einem unteren Grenzwert eines Grenzwertbereichs korreliert wird. Die Grenzwerte, die zuvor festgelegt und in der Datenverarbeitungseinrichtung abgespeichert werden können, ermöglichen eine sehr einfache und nachvollziehbare Bestimmung der Qualitätsinformation. Der Nutzer kann dann auch problemlos signifikante Abweichungen erkennen und entsprechende Kontrollmessungen durchführen, insbesondere wenn die Grenzwerte gemeinsam mit dem Messwert wiedergegeben werden. Beispielsweise kann der Messwert in einer ersten Farbe wiedergegeben werden, wenn er innerhalb der Grenzwerte liegt und anderenfalls in einer zweiten, verschiedenen Farbe.

Bevorzugt können dann der obere und/oder untere Grenzwert des Erwartungswertbereichs des Messwerts an die Datenbrille übermittelt und dort wiedergegeben werden.

Eine bevorzugte Ausführungsform des Verfahrens sieht vor, dass der Datenbrille zumindest eine Oberflächeninformation des Messobjekts bereitgestellt und durch die Datenbrille wiedergegeben wird. Die Oberflächeninformation kann eine ortsaufgelöste Flächendarstellung des Messobjektes sein. Auch können es nur Teilbereiche des Messobjektes sein. Es kann möglich sein, zwischen einer Bilddarstellung der zumindest einen Oberflächeninformation und einer Bilddarstellung des zumindest einen Messwerts zu wechseln. Alternativ können die Bilddarstellungen der Oberflächeninformation und des zumindest eines Messwertes einander überlagern oder nebeneinander angeordnet sein. Ferner kann auch die Bilddarstellung der Oberflächeninformation zumindest teilweise transparent erfolgen. Das bedeutet, dass sich sowohl die Bilddarstellung des zumindest eines Messwertes mit der Oberflächeninformation überlagern können, als auch, dass beide einzeln mit den Realinformationen des Messobjekts überlagert sein können. Somit kann der Nutzer der Datenbrille das reale physische Erscheinungsbild des Messobjekts mit der Oberflächeninformation abgleichen und zusätzlich noch den zumindest einen erfassten Messwert wahrnehmen.

Die Datenverarbeitungseinrichtung kann mit einem lokalen oder entfernten Datenspeicher gekoppelt sein, um die entsprechende Oberflächeninformation des Messobjekts abrufen und bereitstellen zu können.

Bei der Datenverarbeitungseinrichtung handelt es sich bevorzugt zumindest um einen Mikroprozessor ("CPU"). Die Datenverarbeitungseinrichtung kann ferner auch einen Mikrocontroller und herkömmliche Peripheriekomponenten umfassen, um den zumindest einen Messwert von dem Sensorelement zu empfangen, zu verarbeiten und an die Datenbrille zu übermitteln.

Eine vorteilhafte Ausgestaltung des Verfahrens sieht vor, dass durch die Datenverarbeitungseinrichtung der Datenbrille zumindest eine Sollmessposition, an der zumindest ein Messwert zu ermitteln ist, bereitgestellt wird. Die zumindest eine Oberflächeninformation des Messobjekts kann auch mit der zumindest einen Sollmessposition überlagert wiedergegeben werden. Zudem kann die zumindest eine Oberflächeninformation mit der Sollmessposition vor der Erfassung eines Messwerts durch die Datenbrille wiedergegeben werden. Die Bilddarstellung der Oberflächeninformation mit der Sollmessposition kann zumindest teilweise transparent erfolgen. Die Sollmessposition gibt dabei innerhalb der Oberflächeninformation, also innerhalb der ortsaufgelösten Flächendarstellung des Messobjekts, an, an welcher Stelle der Oberfläche des Messobjekts ein Messwert zu ermitteln ist. Somit wird eine unmittelbare Benutzerführung zur Positionierung der Messsonde auf der Oberfläche des Messobjektes zur Verfügung gestellt. Durch die überlagerte Bilddarstellung wird dem Nutzer die jeweilige Sollmessposition vor Erfassung eines Messwerts wiedergegeben. Da der Nutzer nicht nur die Bilddarstellung der Oberflächeninformation einschließlich der Sollmessposition, sondern gleichzeitig auch die Realinformationen der Umgebung wahrnehmen kann, wird der Nutzer dann in die Lage versetzt, die taktile Messsonde an der vorgegebenen Sollmessposition auf die Oberfläche aufzusetzen und einen Messwert zu erfassen. Fehlerhafte Messungen, die aus räumlichen Abweichungen zwischen Sollmessposition und Istmessposition, also der tatsächlichen Position, an der ein Messwert erfasst wurde, resultieren, können deshalb vorteilhafterweise vermieden werden. Bevorzugt wird das Verfahren bei vorgegebenen Prüfplänen eingesetzt. Dadurch können die Prüfzeit und die Fehlerquote reduziert werden.

Bevorzugt wird ein Messwert, der von einer durch die Bilddarstellung erfasst wird, der jeweiligen Sollmessposition zugeordnet. Durch die Zuordnung kann die Datenverarbeitungseinrichtung dann gemäß einer Routine zu einer nachfolgenden Sollmessposition wechseln, die wiederum an die Datenbrille übermittelt und dort wiedergegeben wird.

Bevorzugt ist vorgesehen, dass die zumindest eine Oberflächeninformation mit der zumindest einen Sollmessposition durch die Datenverarbeitungseinrichtung zumindest teilweise mit Messwerten der taktilen Messsonde korreliert werden. Die so korrelierten Informationen werden anschließend an die Datenbrille übertragen. Folglich kann dann durch die Datenbrille die ortsaufgelöste Flächendarstellung des Messobjekts mit den vorherigen und/oder aktuellen Messwerten der taktilen Messsonde wiedergegeben werden. Alternativ kann eine ortsaufgelöste Flächendarstellung des Messobjekts bezogen auf eine Differenz zwischen vorherigen und aktuellen Messwerten der taktilen Messsonde wiedergegeben werden. Die Bilddarstellung der Messsonde und/oder Sollmesspositionen und/oder der ortsaufgelösten Flächendarstellung kann zumindest teilweise transparent erfolgen. Die ortsaufgelöste Flächendarstellung kann insbesondere in Abhängigkeit aktuell erfasster oder in der Vergangenheit erfasster Messwerte oder einer Differenz aus diesen modifiziert werden. Beispielsweise kann die Flächendarstellung des Messobjektes zumindest teilweise eingefärbt werden, um anzugeben an welchen Sollmesspositionen noch keine Messwerte erfasst wurden oder an welchen bereits Messwerte erfasst wurden, oder an welchen in der Vergangenheit Messwerte erfasst wurden und/oder nach Messwerten zu erfassen sind. Auch kann eine Einfärbung bemessen an der jeweiligen Differenz erfolgen, um den Grad der Abweichung einfach erfassbar visuell darzustellen. Zudem können auch Sollmesspositionen jeweils mit einer Auflistung vergangener und/oder aktuell erfasster Messwerte wiedergegeben werden. Durch die Überlagerung mit Realinformationen erhält der Nutzer ein umfassendes Informationsbild der bereits erfassten oder noch zu erfassenden Messwerte, bevorzugt jeweils codiert/zugeordnet zu den jeweiligen Sollmesspositionen innerhalb der ortsaufgelösten Flächendarstellung. Die Benutzerführung ist deshalb deutlich verbessert. Es kann auch vorgesehen sein, dass dem Nutzer Messwerte, die in der Vergangenheit erfasst wurden, bereits vor Erfassung eines entsprechenden Messwerts wiedergegeben werden. Die vorherigen Messwerte sind insofern der jeweiligen Sollmessposition zugeordnet.

Gemäß einer bevorzugten Ausführungsform werden die Oberflächeninformationen des Messobjektes durch einen mit der Datenverarbeitungseinrichtung gekoppelten Datenspeicher und/oder durch ein LIDAR-Sensorelement ("Light detection and ranging") bereitgestellt. Das LIDAR-Sensorelement ist bevorzugt an der Datenbrille angeordnet. Unter LIDAR ist vorliegend eine auf einer optischen Abstandsmessung beruhende Messmethode zur Erfassung und Bereitstellung der ortsaufgelösten Flächendarstellung des Messobjekts zu verstehen. Dadurch, dass das LIDAR-Sensorelement an der Datenbrille angeordnet ist, wird das Messobjekt durch das LIDAR-Sensorelement so erfasst, wie der Nutzer auch das Realraumbild des Messobjekts wahrnimmt. Dies ist von Vorteil, wenn die Bilddarstellung in der Datenbrille von der zumindest einen Oberflächeninformation zumindest teilweise transparent erfolgt, da keine perspektivischen Verzerrungen ausgeglichen werden müssen. Zudem kann durch Verwendung aktueller Messdaten des LIDAR-Sensorelements eine Veränderung, beispielsweise eine bauliche Veränderung, des Messobjekts abgebildet werden.

Alternativ kann das LIDAR-Sensorelement auch unabhängig von der Datenbrille angeordnet sein. Beispielsweise kann das LIDAR-Sensorelement auf einer mobilen Vorrichtung montiert sein, mit deren Hilfe das Messobjekt ganzheitlich erfasst werden kann. Dann kann die Datenverarbeitungseinrichtung die vom LIDAR-Sensorelement erfassten Messdaten derart für die Datenbrille bereitstellen, dass die ortsaufgelöste Flächendarstellung des Messobjekts der perspektivischen Ansicht von der Datenbrille aus entspricht.

Nach einer bevorzugten Ausführungsform wird der Messwert mit einer Positionsgüteinformation durch die Datenverarbeitungseinrichtung korreliert. Die Positionsgüteinformation kann angeben, inwieweit die Istmessposition der Sollmessposition entspricht. Der mit der jeweiligen korrelierten Positionsgüteinformation korrelierte Messwert wird dann an die Datenbrille übermittelt und dort wiedergegeben. Zur Beurteilung kann der Datenverarbeitungseinrichtung eine entsprechende Rückmeldung bereitgestellt werden, beispielsweise durch Eingabe des Nutzers. Somit kann die Vergleichbarkeit von Messungen verbessert werden.

Bevorzugt ist vorgesehen, dass die Positionsgüteinformation angibt, ob ein Abstand zwischen einer Istmessposition und einer Sollmessposition kleiner als ein Grenzabstand ist. Ferner kann die Istmessposition, an der ein Messwert erfasst wurde, durch ein mit der taktilen Messsonde gekoppeltes Positionserfassungselement bereitgestellt werden. Durch den Grenzabstand wird sichergestellt, dass der Messwert gemäß der Vorgabe des Grenzabstands innerhalb einer maximalen räumlichen Abweichung von der Sollmessposition erfasst wird. Durch den Grenzabstand kann die Positionsgüteinformation angeben, ob bezüglich der Istmessposition ein erfasster Messwert akzeptabel ist. Die ortsaufgelöste Flächendarstellung des Messobjekts kann bezüglich der Positionsgüteinformation zumindest teilweise eingefärbt sein, insbesondere in Abhängigkeit davon, ob der Grenzabstand für eine Istmessposition relativ zur Sollmessposition unter- oder überschritten wird. Das Positionserfassungselement kann ein GPS-Sensor oder ähnlicher Sensor sein, der entsprechende Ortskoordinaten bereitstellt. Die Anordnung des Positionserfassungselements an dem taktilen Sensorelement ermöglicht es, die Position der Istmessposition besonders präzise zu bestimmen. Das Positionserfassungselement kann auch mit der taktilen Messsonde gekoppelt sein, so dass der durch die taktile Messsonde erfasste Messwert gleichzeitig mit den entsprechenden Ortskoordinaten bestimmt wird.

Bevorzugt kann der jeweils erfasste Messwert auch mit der jeweiligen Istmessposition durch die Datenverarbeitungseinrichtung korreliert und für die Datenbrille zur dortigen Bilddarstellung bereitgestellt werden.

Gemäß einer bevorzugten Ausführungsform wird zumindest eine Zusatzinformation durch die Datenverarbeitungseinrichtung an die Datenbrille übermittelt und dort wiedergegeben. Die Zusatzinformation umfasst bevorzugt einen Sollflächenmessbereich und/oder einen Sollmesspunkt und/oder eine Wiederholungsstufe des Sollmesspunkts. Die jeweilige Zusatzinformation wird bevorzugt vor oder auch während der Erfassung eines Messwerts wiedergegeben. Die ortsaufgelöste Flächendarstellung des Messobjekts ist bevorzugt in eine Mehrzahl an Sollflächenmessbereichen unterteilt. Innerhalb jedes Sollflächenmessbereichs ist zumindest ein Sollmesspunkt, bevorzugt eine Mehrzahl an Sollmesspunkten, in gleichen und/oder unterschiedlichen Sollmesspositionen innerhalb des Sollflächenbereiches vorgesehen. Für jeden Sollmesspunkt sind bevorzugt mehrere Wiederholungsstufen, also eine bestimmte Anzahl an durchzuführenden Messungen, vorgesehen. Die entsprechenden Zusatzinformationen können dem Nutzer dann durch die Datenbrille vor und/oder während der Erfassung eines jeweiligen Messwerts wiedergegeben werden. Dadurch wird die Benutzerführung verbessert, weil dem Nutzer die jeweiligen Zusatzinformationen bereitgestellt werden, um den Messwert entsprechend der Vorgaben zu erfassen. Somit kann der Nutzer besonders einfach und effizient ein vorgegebenes Prüfmuster abarbeiten. Die ortsaufgelöste Flächendarstellung kann bevorzugt entsprechend des Sollflächenmessbereichs und/oder des Sollmesspunkts und/oder der Wiederholungsstufe zumindest teilweise eingefärbt und/oder optisch hervorgehoben werden, um dem Nutzer eine weitere visuelle Hilfestellung bereitzustellen. Nach erfolgter Messung kann dies durch ein Signal, wie beispielsweise einer Farbe, dargestellt werden.

Gemäß einer Ausführungsform kann die Datenverarbeitungseinrichtung extern zur Messsonde vorgesehen sein. Die Messsonde kann mit der Datenverarbeitungseinrichtung zur Datenübermittlung über eine Schnittstelle kabelgebunden gekoppelt sein, beispielsweise mit einer in der Schnittstelle vorgesehenen Schaltung, um die Daten nach dem USB-Protokoll oder dem UART-Protokoll zu übertragen. Auch kann dies kabellos und vorzugsweise verschlüsselt erfolgen. Alternativ kann die Datenverarbeitungseinrichtung auch separat zur Messsonde und Datenbrille oder in der Datenbrille integriert sein.

Bezüglich der Datenübertragung ist bevorzugt vorgesehen, dass diese zwischen der taktilen Messsonde und der Datenverarbeitungseinrichtung und/oder zwischen der Datenverarbeitungseinrichtung und der Datenbrille drahtlos erfolgt. Dadurch kann die Datenverarbeitungseinrichtung unabhängig von der Messsonde und der Datenbrille, beispielsweise in einem Servicefahrzeug, angeordnet sein. Der Nutzer kann dann mit einem relativ handlichen Sensorelement und der Datenbrille ein Prüfmuster am Messobjekt abarbeiten, ohne unhandliche elektronische Komponenten mitführen zu müssen. Die Kommunikation kann insbesondere anhand eines Bluetooth-Standards, Bluetooth-Low-Energy-Standards, wie zum Beispiel Zigbee, eines WLAN- oder eines anderen Funkstandards erfolgen.

Die Datenbrille kann bevorzugt zwischen den vorbeschriebenen Bilddarstellungsarten wechseln oder diese einander überlagern. Zudem kann jegliche Bilddarstellung zumindest teilweise transparent erfolgen, so dass sich die Bilddarstellung für den Nutzer mit Realinformationen der Umgebung oder des Messobjekts überlagert. Dem Nutzer wird somit eine unmittelbar erfolgende Bilddarstellung aller relevanten und zur Verfügung stehenden Informationen ermöglicht, wobei er gleichzeitig weiterhin das reale Messobjekt wahrnehmen kann. Trotz der Wahrnehmung des realen physischen Messobjekts, wird es dem Nutzer ermöglicht, die jeweiligen Messwerte und Informationen anhand des Messobjekts beurteilen zu können. Besonderheiten der erfassten Messwerte oder der jeweiligen Informationen kann der Nutzer dann während des Messvorgangs bemerken und geeignete Maßnahmen, wie beispielsweise zusätzliche Messungen für spezifische Messpunkte, ergreifen. Dadurch wird der Gesamt-Messvorgang effizienter, denn es muss nicht erst auf eine nachgelagerte Auswertung gewartet werden, bis Besonderheiten wahrgenommen werden. So wird vermieden, dass ein erneuter Prüfzyklus ausgeführt werden muss, um verbliebene Besonderheiten abzuklären. Das Prüfverfahren wird insgesamt stark beschleunigt.

Weiter bevorzugt kann die Datenverarbeitungseinrichtung Gebrauch von einer entsprechenden Anwendungssoftware (App) machen, die lokal oder dezentral ausführbar sein kann.

Die Anwendungssoftware und/oder die Datenbrille können Interaktionsmöglichkeiten vorsehen, um den entsprechenden Bilddarstellungsmodus der Datenbrille entsprechend der außer dem Messwert anzuzeigenden Informationen einzustellen.

Die Aufgabe wird des Weiteren durch ein System gelöst, das zumindest eine Messsonde, eine Datenbrille und eine Datenverarbeitungseinrichtung aufweist. Das System ist eingerichtet, um das Verfahren zur taktilen Schichtdickenmessung auf einer Oberfläche eines Messobjekts wie zuvor beschrieben durchzuführen. Die Komponenten des Systems sind zur Kommunikation aufeinander abgestimmt.

Weiter bevorzugt erfüllt die Datenbrille auch die Funktion einer Schutzbrille, was insbesondere bei großtechnischen Aufbauten von Vorteil ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Darstellung eines Systems zur Durchführung eines Verfahren zur taktilen Schichtdickenmessung auf einer Oberfläche eines Messobjekts,
- Figur 2: eine schematische Darstellung einer Bilddarstellung in einer Datenbrille,
- Figur 3: eine schematische Darstellung einer weiteren Bilddarstellung des Messobjekts mit überlagerter Benutzerführung, und
- Figur 4: eine schematische Darstellung einer weiteren Bilddarstellung des Messobjekts mit Messwert und Zusatzinformationen.

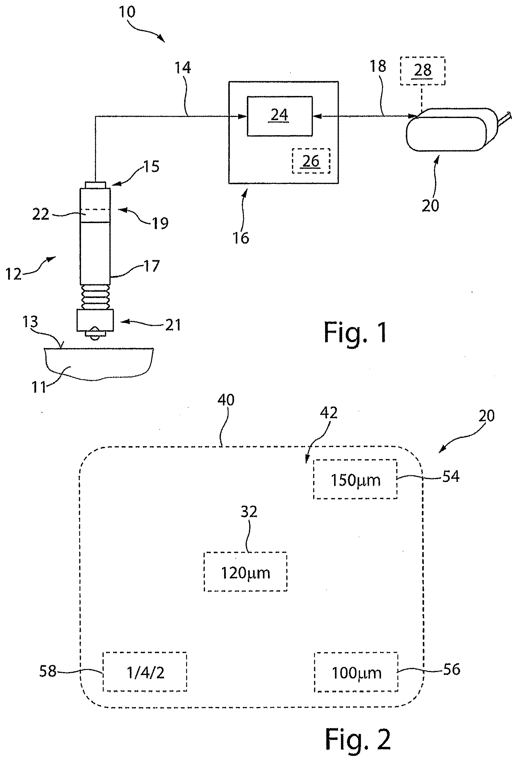

In Figur 1 ist schematisch vereinfacht ein System 10 gezeigt, um ein Verfahren zur taktilen Schichtdickenmessung auf einer Oberfläche 13 eines Messobjekts 11 auszuführen. Bei solchen Messobjekten 11 kann es sich um großflächige Objekte oder Objekte handeln, deren Oberflächen schwer zugänglich sind. Beispielsweise können Tanks, Brücken, Container- oder Frachtschiffe oder sonstige metallische Wandungen mit einer Oberflächenbeschichtung, insbesondere Lacke oder dergleichen, vorgesehen sein. Das System 10 umfasst eine taktile Messsonde 12 zur Schichtdickenmessungen. Das System 10 weist ferner eine Datenverarbeitungseinrichtung 16 auf. Die taktile Messsonde 12 ist mit der Datenverarbeitungseinrichtung 16 zur Datenübertragung durch eine Schnittstelle 15 mittels eines kabellosen oder kabelgebundenen Datenübertragungsmechanismus 14 gekoppelt. Der Schnittstelle 15 kann in einem Gehäuse 17 der Messsonde eine Schaltung 19 zugeordnet sein, um die Übertragung der Daten anzusteuern. Die Messsonde 12 umfasst einen Messkopf 21, der auf der Oberfläche 13 des Messobjekts zur Messung - beispielsweise einer Schichtdicke - aufgesetzt wird. Das System 10 umfasst ferner eine Datenbrille 20. Die Datenverarbeitungseinrichtung 16 ist mittels eines kabellosen oder kabelgebundenen Datenübertragungsmechanismus 18 mit der Datenbrille 20 gekoppelt. Die Datenverarbeitungseinrichtung 16 kann in der Messsonde 12 oder in der Datenbrille 20 integriert sein. Auch kann die Datenverarbeitungseinrichtung 16 in einem mobilen Gerät oder einem stationären Gerät vorgesehen sein. In der Datenverarbeitungseinrichtung 16 kann für die Auswertung und Kommunikation eine Anwendungssoftware (App) 24 gespeichert sein. Die Datenbrille 20 ist beispielsweise eine Videobrille, mittels der eine erweiterte Realität visuell dargestellt werden kann. Vorliegend ist die Datenbrille 20 dazu als Videobrille mit einer digitalen Kamera als Projektionsmittel ausgebildet. So können Daten, Informationen und/oder Messwerte als eine Bilddarstellung ins Sichtfeld des Nutzers projiziert werden.

Den Datenübertragungsmechanismen 14, 18 kann ein Bluetooth-Low-Energy-Standard zugrunde liegen, insbesondere das Zigbee-Übertragungsprotokoll. Der Datenübertragungsmechanismus 14 von der taktilen Messsonde 12 zur Datenverarbeitungseinrichtung 16 ist unidirektional. Alternativ kann er auch bidirektional ausgebildet sein. Der Datenübertragungsmechanismus 18 zwischen der Datenverarbeitungseinrichtung 18 und der Datenbrille 20 ist bidirektional.

Optional ist mit der taktilen Messsonde 12 ein Positionserfassungselement 22 ortsfest gekoppelt oder innerhalb der Messsonde 12 angeordnet sein.

Ferner kann ein lokaler oder entfernter Datenspeicher 26 vorgesehen sein, um durch die Datenverarbeitungseinrichtung 16 durchgeführte Operationen zu unterstützen oder um Informationen, Daten oder Messwerte aus vergangenen Messungen abrufen zu können.

Der lokale Datenspeicher 26 kann in der Messsonde 12 oder der Datenbrille 20 integriert sein. Der entfernte Datenspeicher 26 kann ein Laptop oder dergleichen sein, welcher vom Benutzer mitgeführt wird.

Weiterhin kann das System 10 ein LIDAR-Sensorelement 28 umfassen. Das LIDAR-Sensorelement 28 kann an der Datenbrille 20 angeordnet sein. Das LIDAR-Sensorelement 28 ermöglicht es, Messdaten von Positionen auf der Oberfläche 11 des Messobjekts 11 zu erfassen, um so eine ortsaufgelöste Flächendarstellung der Messpositionen auf dem Messobjekt 11 zu ermöglichen.

Zur taktilen Schichtdickenmessung auf der Oberfläche 13 des Messobjekts 11 wird die taktilen Messsonde 12 zumindest einmal auf derselben Messposition aufgesetzt, durch die Messsonde 12 zumindest ein Messwert 32 erfasst und an die Datenverarbeitungseinrichtung 16 übermittelt.

Die durch das LIDAR-Sensorelement 28 erfasste Position auf dem Messobjekt 11 wird an die Datenverarbeitungseinrichtung 16 übermittelt.

Im Datenspeicher 26 sind zumindest Sollwerte für die Schichtdicke oder sonstige zu erfassende Daten hinterlegt. Bevorzugt ist ein vorgegebenes Prüfmuster gespeichert, gemäß dem das Messobjekt 11 zu untersuchen ist.

In Figur 2 ist schematisch eine Projektionsfläche 40 in der Datenbrille 20 dargestellt. Innerhalb der Projektionsfläche 40 können verschiedene bildliche Darstellungen 42 ausgewählt und eingestellt werden. Beispielsweise kann ein Messwert 32 in einem Feld angezeigt werden. Bei diesem Messwert 32 handelt es sich um den aktuell erfassten Messwert.

Des Weiteren können in einem Feld 54 ein oberer Grenzwert und im Feld 56 ein unterer Grenzwert eingeblendet werden. Diese Grenzwerte 54, 56 können auf die aktuelle Messposition oder auf hinterlegten Daten beruhen. Sofern beispielsweise der aktuelle Messwert 32 innerhalb der Grenzwerte liegt, kann dies auch zusätzlich visuell dargestellt und/oder mit einem akustischen Signal bestätigt werden. Alternativ kann das optische und/oder akustische Signal für die Erfassung eines Messwertes 32 innerhalb des oberen und unteren Grenzwertes 54, 56 auch ausschließlich erfolgen, ohne dass visuelle Angaben bezüglich dem oberen und unteren Grenzwert 54, 56 eingeblendet werden.

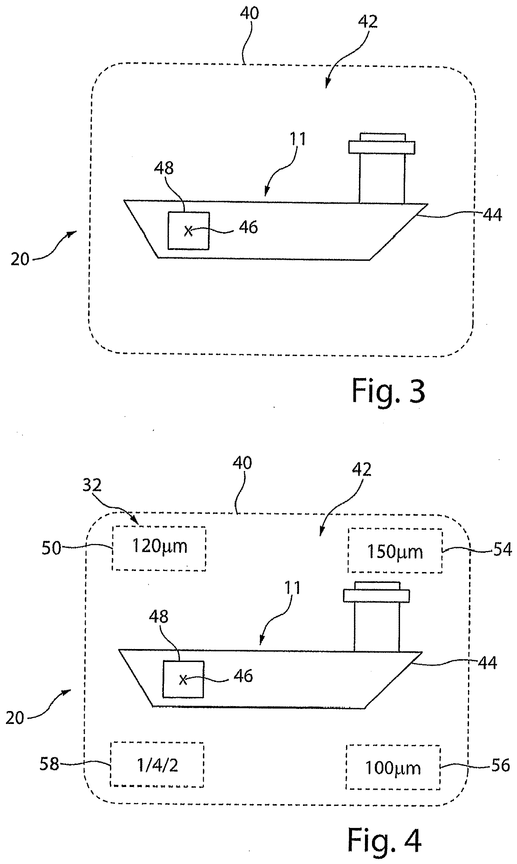

Des Weiteren kann beispielsweise eine Zusatzinformation 58 eingeblendet werden, die nachfolgend anhand von Figur 4 näher erörtert wird.

Figur 3 zeigt eine Darstellung einer Bilddarstellung 42 des Messobjekts 1 mit einer überlagerten Benutzerführung 48 durch die Datenbrille 20. Die Datenbrille 20 stellt eine Oberflächeninformation in Form einer ortsaufgelösten Flächendarstellung 44 in einer Projektionsfläche 40 dar. Auf diese Projektionsfläche 40 wird die Bilddarstellung 42 projiziert, die das Messobjekt 11 zeigt. Die Oberflächeninformation kann die ortsaufgelöste Flächendarstellung 44 des Messobjekts 11 wiedergeben, hier die Flächendarstellung eines Schiffs. Im Allgemeinen wird die Flächendarstellung 44 des Messobjekts 11 in einem deutlich größeren Maßstab wiedergegeben werden. Die Darstellung ist vorliegend insofern lediglich schematisch.

Die Flächendarstellung 44 des Messobjekts 11 und die Sollmesspositionen 46 werden dabei vor der Erfassung eines Messwerts 32 in der Projektionsfläche 40 wiedergegeben. Die Bilddarstellung 42 umfasst eine Benutzerführung 48, die angibt, für welche Sollmessposition 46 als nächstes zumindest ein Messwert 32 zu ermitteln ist. Dadurch, dass die Bilddarstellung 42 zumindest teilweise transparent erfolgt, überlagert sich die Bilddarstellung 42 mit Realinformationen des Messobjekts 11. Die Benutzerführung 48 ermöglicht es dem Nutzer dann, in besonders einfacher und reproduzierbarer Weise die entsprechende Sollmessposition 46 aufzufinden, so dass der Messwert auch in Übereinstimmung mit der jeweiligen Sollmessposition 46 erfasst werden kann.

Figur 4 zeigt eine schematische Darstellung einer Bilddarstellung 42 des Messobjekts 11 mit einem Messwert 32 und Zusatzinformationen 58. Der Messwert 32 kann wiederum mit zumindest einer Oberflächeninformation des Messobjekts 11 korreliert sein. Zudem umfasst die Bilddarstellung 42 eine Qualitätsinformation 50 des Messwerts 32. Der Grenzwertbereich 54, 56 gibt das Intervall an, innerhalb dessen der jeweilige Messwert 32 für die jeweilige Sollmessposition liegen sollte. Die Qualitätsinformation 50 gibt dann an, ob der Messwert 32 innerhalb des Grenzwertbereichs liegt. Beispielsweise kann der Messwert 32 entsprechend einer ersten Farbe (grün) für eine erste Qualitätsinformation 50 eingefärbt sein, wenn der Messwert 32 innerhalb des Grenzwertbereichs liegt. Anderenfalls kann die Qualitätsinformation 50 entsprechend einer anderen Farbe (rot) eingefärbt sein. Dem Nutzer wird somit besonders einfach und effizient dargestellt, in welchem Verhältnis der erfasste Messwert 32 zu den Grenzen des Grenzwertbereichs liegt.

Zudem umfasst die Bilddarstellung 42 die bereits zuvor beschriebene ortsaufgelöste Flächendarstellung 44 des Messobjekts 11 und die Benutzerführung 48 entsprechend der jeweiligen Sollmessposition 46. Dem Nutzer wird also auch wiedergegeben, in Bezug auf welche Sollmessposition 46 der erfasste Messwert 32 zugeordnet ist.

Vorliegend ist die Bilddarstellung 42 des Messwerts 32 zusätzlich mit weiteren Zusatzinformationen 58 korreliert, die ebenfalls wiedergegeben werden. Die Zusatzinformationen 58 umfassen eine Angabe zur Position und/oder Lage des Sollmessflächenbereiches ("1"), eine Anzahl an Sollmesspunkten ("4") innerhalb des vorbestimmten Sollflächenmessbereiches und eine Wiederholungsstufe von Messungen ("2") an den jeweiligen Sollmesspunkten. Die Oberfläche des Messobjekts 11 ist entsprechend einem vorgegebenen Prüfmuster in Sollmessflächenbereiche unterteilt. Die Zusatzinformationen 58 assistieren dem Nutzer, die jeweils nächste Sollmessposition 46 innerhalb des Sollmessflächenbereiches anzusteuern.

Anschließend kann die jeweilige Anzahl der Wiederholungen von Messungen an den vorgegebenen Messpunkten quittiert werden, sodass der Nutzer zum nächsten Sollmesspunkt übergeht. An diesem Messpunkt kann die Anzahl der Wiederholungen von Messungen wiederum durchgeführt werden. Dies ermöglicht in einfacher Weise, dass der Nutzer mit einer hohen Sicherheit ein vorgegebenes Prüfmuster vollständig abarbeitet.

## Patentansprüche

1. Verfahren zur taktilen Messung auf einer Oberfläche (13) eines Messobjekts (11),
- bei dem zumindest ein Messwert (32) mittels einer taktilen Messsonde (12) erfasst wird,
**dadurch gekennzeichnet,**
- **dass** der zumindest eine Messwert (32) durch eine Datenverarbeitungseinrichtung (16) an eine Datenbrille (20) übertragen wird, und
- **dass** der zumindest eine Messwert (32) in der Datenbrille (20) wiedergegeben wird.

2. Verfahren nach Anspruch 1, **dadurch gekennzeichnet, dass** eine Bilddarstellung (42) des zumindest einen Messwertes (32) in der Datenbrille (20) zumindest teilweise transparent erfolgt, so dass die Bilddarstellung (42) mit Realinformationen aus der tatsächlichen Umgebung überlagert wird.

3. Verfahren nach einem der vorherigen Ansprüche, **dadurch gekennzeichnet, dass** zumindest ein Messwert (32) durch die Datenverarbeitungseinrichtung (16) mit zumindest einer Qualitätsinformation korreliert wird, und dass der Messwert (32) mit der jeweiligen korrelierten Qualitätsinformation an die Datenbrille (20) übermittelt und dort wiedergegeben wird.

4. Verfahren nach Anspruch 3, **dadurch gekennzeichnet, dass** der Messwert (32, 52) durch die Datenverarbeitungseinrichtung (16) mit zumindest einem oberen und/oder einem unteren Grenzwert (54, 56) eines Grenzwertbereichs korreliert wird, insbesondere, dass der obere und/oder untere Grenzwert (54, 56) des Grenzwertbereichs für den Messwert (32) an die Datenbrille (20) übermittelt und dort wiedergegeben wird.

5. Verfahren nach einem der vorherigen Ansprüche, **dadurch gekennzeichnet, dass** der Datenbrille (20) zumindest eine Oberflächeninformation des Messobjekts (11), insbesondere eine ortsaufgelöste Flächendarstellung (44) des Messobjektes (11) bereitgestellt und durch die Datenbrille (20) wiedergegeben wird, und insbesondere zwischen einer Bilddarstellung (42) der zumindest einen Oberflächeninformation und einer Bilddarstellung (42) des zumindest einen Messwerts (32, 52) ein Wechsel angesteuert wird oder beide einander überlagert oder nebeneinander dargestellt werden.

6. Verfahren nach Anspruch 5, **dadurch gekennzeichnet, dass** durch die Datenverarbeitungseinrichtung (16) der Datenbrille (20) zumindest eine Sollmessposition (46) übermittelt wird, an der zumindest ein Messwert (32) zu ermitteln ist, insbesondere, dass die ortsaufgelöste Flächendarstellung (44) überlagert mit der Sollmessposition (46) vor der Erfassung eines Messwerts (32) wiedergegeben werden, und die Bilddarstellung (42) vorzugsweise zumindest teilweise transparent erfolgt.

7. Verfahren nach einem der Ansprüche 5 oder 6, **dadurch gekennzeichnet, dass** die zumindest eine Oberflächeninformation mit der Sollmessposition (46) durch die Datenverarbeitungseinrichtung (16) mit den aktuell erfassten Messwerten (32) der taktilen Messsonde (12) korreliert werden und dass die so korrelierte Information an die Datenbrille (20) übertragen wird, so dass durch die Datenbrille (20) in der ortsaufgelösten Flächendarstellung (44) des Messobjekts (11) die vorherigen und/oder die aktuellen Messpositionen und/oder die alten Messwerte und/oder aktuellen Messwerte (32) der taktilen Messsonde (12) wiedergegeben werden.

8. Verfahren nach einem Ansprüche 5 bis 7, **dadurch gekennzeichnet, dass** die zumindest eine Oberflächeninformation des Messobjekts (11) durch einen mit der Datenverarbeitungseinrichtung (16) gekoppelten Datenspeicher (26) und/oder durch ein LIDAR-Sensorelement (28) bereitgestellt werden, insbesondere, dass das LIDAR-Sensorelement (28) an der Datenbrille (20) angeordnet ist.

9. Verfahren nach einem der vorherigen Ansprüche, **dadurch gekennzeichnet, dass** der Messwert (32) mit einer Positionsgüteinformation durch die Datenverarbeitungseinrichtung (16) korreliert wird, und dass der Messwert (32) mit der jeweiligen korrelierten Positionsgüteinformation an die Datenbrille (20) übermittelt und dort wiedergegeben wird.

10. Verfahren nach Anspruch 9, **dadurch gekennzeichnet, dass** die Positionsgüteinformation angibt, ob ein Abstand zwischen einer Istmessposition und einer Sollmessposition (46) innerhalb oder außerhalb eines Grenzwertes liegt, und dass die Istmessposition, an der ein Messwert (32, 52) erfasst wurde, durch ein mit der taktilen Messsonde (12) gekoppeltes Positionserfassungselement (22) bereitgestellt wird.

11. Verfahren nach einem der vorherigen Ansprüche, **dadurch gekennzeichnet, dass** zumindest eine Zusatzinformation (58) umfassend einen Sollflächenmessbereich und/oder einen Sollmesspunkt und/oder eine Wiederholungsstufe des Sollmesspunkts durch die Datenverarbeitungseinrichtung (16) an die Datenbrille (20) übermittelt und dort wiedergegeben wird, insbesondere, dass die jeweilige Zusatzinformation (58) vor oder während der Erfassung eines Messwerts (32) wiedergegeben wird.

12. Verfahren nach einem der vorherigen Ansprüche, **dadurch gekennzeichnet, dass** durch die taktile Messsonde (12) die Messwerte (32) an die Datenverarbeitungseinrichtung (16) übermittelt werden, und dass die Datenverarbeitungseinrichtung (16) extern oder intern zur Messsonde (12) vorgesehen ist.

13. Verfahren nach einem der vorhergehenden Ansprüche, **dadurch gekennzeichnet, dass** eine Datenübertragung zwischen der taktilen Messsonde (12) und der Datenverarbeitungseinrichtung (16) und/oder zwischen der Datenverarbeitungseinrichtung (16) und der Datenbrille (20) drahtlos erfolgt.

14. System umfassend zumindest eine Messsonde (12), eine Datenbrille (20) und eine Datenverarbeitungseinrichtung (16), **dadurch gekennzeichnet, dass** das System (10) zur Durchführung des Verfahrens zur taktilen Messung, insbesondere Schichtdickenmessung, auf einer Oberfläche (13) eines Messobjekts (11) gemäß einem der Ansprüche 1 bis 13 ausgebildet ist.

15. System nach Anspruch 14, **dadurch gekennzeichnet, dass** die Datenbrille (20) als Schutzbrille ausgebildet ist.
